# EUROPÄISCHE PATENTSCHRIFT

(11) **EP 1 554 957 B1**
(45) Veröffentlichungstag und Bekanntmachung des Hinweises auf die Patenterteilung: **19.03.2008**
(21) Anmeldenummer: 05100198.0
(22) Anmeldetag: 14.01.2005
(51) Int. Cl.: A47J 27/00, A47J 27/21, H05B 3/72

(54) **Heizmodul für ein Haushaltsgerät**
Heating device for a domestic appliance
Module de chauffage pour un appareil ménager

(30) Priorität: 16.01.2004 EP 04360003
(43) Veröffentlichungstag der Anmeldung: 20.07.2005
(73) Patentinhaber: BSH Bosch und Siemens Hausgeräte GmbH, 81739 München (DE)
(72) Erfinder: Amrhein, Christophe, 67640 Lipsheim (FR); Mastio, Emmanuel, 67118 Geispolsheim (FR)

(56) Entgegenhaltungen:
- WO-A-01/13681
- FR-A- 2 684 861
- GB-A- 2 369 037
- US-A- 3 505 498

## Beschreibung

Die Erfindung betrifft ein Haushaltsgerät, insbesondere ein Kochgerät, mit einer Heizeinrichtung und ein Heizmodul.

Haushaltsgeräte sind Massenartikel und stehen immer unter einem Marktdruck, der zu Rationalisierungen zwingt. Hauhaltsgeräte, insbesondere solche Geräte, die eine höhere Heizleistung aufbringen müssen, wie Kochgeräte und dgl., wurden bisher überwiegend mit sogenannten Rohrheizkörpern ausgestattet, bei denen ein elektrischer Widerstandsdraht in Isolationsmaterial gepackt und in einem an der zu beheizenden Fläche festgelöteten oder festgeschweißten Rohrteil untergebracht wurde. Derartige Rohrheizkörper sind jedoch relativ aufwendig.

Es ist bereits in der DE 100 19 126 bzw. der DE 37 17 845 oder der DE 43 41 036 versucht worden, sogenannte Dickschicht-Heizelemente für Haushaltsgeräte einzusetzen. Dickschicht-Heizelemente bestehen aus einem oder mehreren Widerstandsleitern, die auf einer relativ starren und spröden Isolationsschicht oder Isolationsplatte aus Keramik aufgebracht sind. Dickschicht-Heizelemente sind relativ preiswert, ihre Anwendung für Haushaltsgeräte ist jedoch bisher an Grenzen gestoßen. Ein Problem dabei ist die Befestigung an der zu beheizenden Platte. Bei niedrigen Temperaturen, wie sie beispielsweise bei Warmhalteplatten von Kaffeemaschinen auftreten (DE 37 17 845) genügt ein einfaches mittiges Andrücken der mit dem Widerstandselement versehenen Keramikplatte an die Unterseite der Standfläche für die Kaffeekanne. Dickschicht-Heizelemente sind jedoch sehr empfindlich gegen Überhitzung. Würde ein derartiges Heizelement, das für einen höheren Heizstrom und demzufolge größere Temperaturen ausgelegt ist, lediglich angedrückt, so wären Luftspalte, die sich beispielsweise erst durch Thermospannungen öffnen, unvermeidlich. Im Bereich dieser Luftspalte würde dann die erzeugte Wärme nicht schnell genug abfließen, so dass an dieser Stelle das Widerstands-Heizelement durchbrennt.

Es ist weiterhin bekannt (DE-A-100 19 126) ein Dickschicht-Heizelement aus einer Keramikplatte mit einem elektrischen Widerstandskreis an der Unterseite eines Rührgefäßes anzuschweißen, gegebenenfalls mittels Laser, oder in ein Rührgefäßunterteil aus Kunststoff einzugießen. Die Verschweißung hinterlässt jedoch unschöne Spuren, wenn sie an einer Fläche vorgenommen wird, die entweder selbst sichtbar ist, oder die an einem gut wärmeleitenden Blechelement vorgenommen wird, das von der gegenüberliegenden Seite sichtbar ist, wie das jeder Boden eines Koch- oder Gargefäßes ist. Die Einbettung in Kunststoff begrenzt wiederum die thermische Belastbarkeit.

Schließlich wurde versucht, ein Dickschicht-Heizelement aus einer Keramikplatte mit einem Heizwiderstand an einem Trägerblech anzuordnen und dieses mit der zu beheizenden Fläche zu verbinden (DE-A-43 41 036). Auch diese Konstruktion ist lediglich für Warmhaltegeräte bestimmt, deren Heizleistung begrenzt ist. Demzufolge wird der Träger mit der zu beheizenden Fläche haftend verbunden oder lediglich federnd angelegt.

GB-A-2 369 037 offenbart ein Kochgerät bei der eine zu beheizende Fläche eines Lebensmittelbehälters durch Federelemente nachgiebig gegen eine Heizvorrichtung gedrückt wird. Im normalen Betrieb wird eine unterschiedliche Ausdehnung von Lebensmittelbehälter und Heizvorrichtung, die Thermospannungen hervorruft, dadurch ausgeglichen, dass der Lebensmittelbehälter und die Heizvorrichtung aufgrund der nicht sehr hohen Federkräfte relativ gegeneinander gleiten können. Dabei wird die Heizvorrichtung zwar ausgedehnt, behält aber ihre Form bei. Insbesondere für bei hohen Betriebstemperaturen nachteilig ist, dass keine festen Befestigungen, wie Bolzen oder Schrauben, verwendet werden können, da diese die gegenseitige Verschiebung unterbinden würden.

In US 3,505,498 ist ein Kochgerät mit integraler dielektrischer Schicht und elektrischem Heizelement offenbart. Dabei ist Stahlbehälter fest mit einer darunter angebrachten dielektrischen Porzellanschicht verbunden, an der wiederum ein Heizwiderstand fest angebracht ist. Zur sicheren Befestigung der Porzellanschicht, insbesondere zur Vermeidung von Rissen in dieser Schicht, wird bei der Herstellung die Porzellanschicht bei hoher Temperatur durch Brennen flächig fest mit der Stahlaufnahme verbunden. Beim Abkühlen wird die Porzellanschicht aufgrund des höheren Wärmeausdehnungskoeffizienten von Stahl im Vergleich zur Keramik unter Vorspannung gesetzt. Im normalen Betrieb bleibt aufgrund der weit niedrigeren Temperaturen im Vergleich zur Herstellung die Keramik, und damit das gesamte Heizelement, unter Vorspannung fest mit dem Stahlbehälter verbunden. Eine relative Formanpassung zwischen Keramik und Stahlbehälter und eine Verformung der Keramik werden so wirksam verhindert.

Der Erfindung liegt somit die Aufgabe zugrunde, ein Haushaltsgerät oder ein Heizmodul bereitzustellen, das auch für eine größere Heizleistung geeignet ist.

Die Aufgabe wird durch die im Anspruch 1 oder im Anspruch 17 angegebenen Merkmale gelöst.

Durch die erfindungsgemäße Ausgestaltung kann ein sogenanntes Dickschicht-Heizelement auch zum Beheizen von Haushaltsgeräten eingesetzt werden, die eine höhere Heizleistung im Bereich von 1000 bis 2000 W erfordern. Durch die Ausbildung als Heizmodul ist einerseits eine einfache Anpassung der Heizeinrichtung an die unterschiedlichsten Geräte und Einsatzzwecke möglich, andererseits können Heizelement; Isolierschicht und Träger in der technisch gebotenen Weise fest und funktionssicher miteinander verbunden werden, ohne dass auf ästhetische Gesichtspunkte oder die Vermeidung eventuell sichtbarer Spuren der Verbindung geachtet werden muss. Durch die verformbare Ausgestaltung des Heizmoduls wird sichergestellt, dass sich zwischen der zu beheizenden Fläche und dem Träger nach der Montage kein Luftspalt befindet bzw. im Betrieb, beispielsweise durch eine Relativbewegung zwischen Heizmodul und zu beheizender Fläche durch unterschiedliche Ausdehnungskoeffizienten kein Luftspalt bildet, der zu einer örtlichen Überhitzung des Heizelementes und dadurch zu dessen Schädigung führen könnte.

Vorteilhafte Weiterbildungen sind den Unteransprüchen zu entnehmen.

Die Formanpassung für einen Thermospannungsausgleich wird insbesondere durch die (in bestimmten Grenzen) verformbare Ausgestaltung des Heizmoduls erreicht, wobei in diesem Zusammenhang einerseits die spezielle Dimensionierung und Ausbildung des Trägers in enger Anpassung an die Dimensionierung von Heizelement und Isolationsschicht zu erwähnen ist, und andererseits die Befestigung des Trägers an der zu beheizenden Fläche über mechanische Befestigungsmittel, wie beispielsweise Schrauben oder Bolzen, erfolgen sollte, die mit dazu beitragen, Aufwölbungen am Träger zu verhindern.

Eine weitere, bevorzugte Maßnahme für einen Thermospannungsausgleich besteht darin, dafür zu sorgen, dass sich der gesamte Träger homogen erwärmt.

Dies kann beispielsweise dadurch bewirkt werden, dass das Heizelement mit einem langgestreckten, elektrischen Widerstandsleiter über im Wesentlichen die gesamte Fläche des Trägers geführt und/oder die Heizleistung des Heizelementes symmetrisch über den Träger verteilt ist. Dadurch werden unterschiedliche Erwärmungsgrade vermieden, die auch zu unkontrollierten Verformungen führen können, durch die Luftspalte entstehen können.

Eine weitere Maßnahme zur leistungsoptimierten Anpassung des Heizmoduls an eine Verwendung für höhere Heizleistungen besteht darin, zwischen dem Träger und der zu beheizenden Fläche eine elastisch nachgiebige Zwischenlage anzuordnen, die einerseits die Aufgabe hat, einen Wärmeübertragungskontakt zwischen dem Träger und der zu beheizenden Fläche auch dann aufrechtzuerhalten, wenn sich der Träger stärker relativ zur zu beheizenden Fläche verformt. Andererseits kann die Zwischenlage so ausgebildet sein, dass sie zusätzlich die Wärmeverteilung verbessert und die Wärmeeinleitung in die zu beheizende Fläche beschleunigt. Dies kann insbesondere bei hohen Heizleistungen (beispielsweise 2000 W) von entscheidendem Vorteil sein, um einer Überhitzung des Heizmoduls vorzubeugen.

Das erfindungsgemäße Heizmodul kann in großen Stückzahlen vorab hergestellt werden und wird anschließend einfach auf der zu beheizenden Fläche befestigt. Die Herstellung des zu beheizenden Geräts oder der zu beheizenden Einrichtung kann somit unbeeinflusst von den Erfordernissen der Heizeinrichtung erfolgen.

Ein Ausführungsbeispiel der Erfindung wird nachfolgend anhand der Zeichnung näher erläutert. Es zeigen:
- Fig. 1: eine schematische Darstellung eines erfindungsgemäßen Haushaltsgeräts im Schnitt, und
- Fig. 2: eine Draufsicht auf ein erfindungsgemäßes Heizmodul.

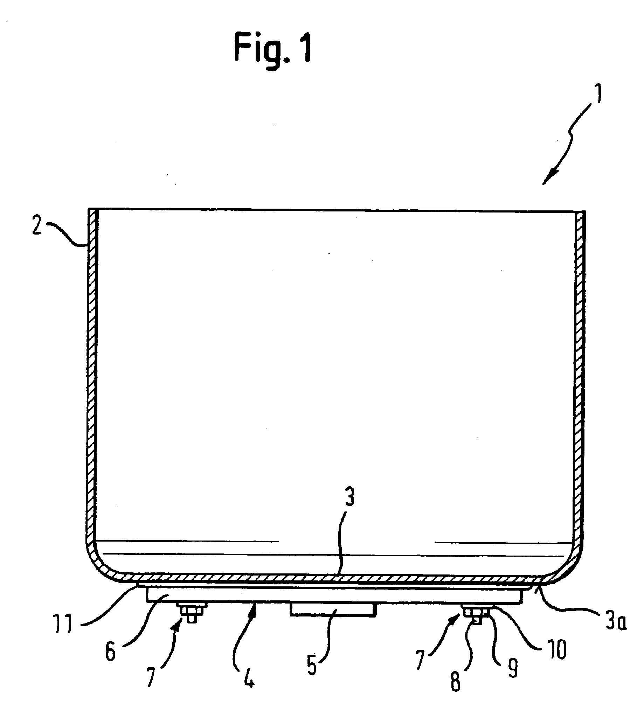

Fig. 1 zeigt in schematischer Darstellung ein Ausführungsbeispiel eines erfindungsgemäßen Haushaltsgerätes 1 in Form eines Behälters 2, der beispielsweise der Aufnahmebehälter eines Dampfgargerätes ist, das als Sonderzubehör oder serienmäßig für Herde geliefert wird. Der Begriff "Haushaltsgerät" soll alle Geräte umfassen, die in irgendeiner Weise für haushaltstypische bzw. haushaltsähnliche Arbeiten verwendet werden, soll jedoch nicht auf den Privathaushalt begrenzt sein. So kann die Erfindung beispielsweise auch für Geräte eingesetzt werden, die in Restaurantküchen oder dgl. Verwendung finden.

Der Behälter 2 besteht aus einem Stahlblech, das bevorzugt tiefgezogen wurde und bevorzugt aus Edelstahl besteht. Der Behälter 2 enthält einen Boden 3, an dessen nach außen weisender Fläche 3a eine Heizeinrichtung 4 befestigt ist. Der Boden 3 kann geringfügig nach außen gewölbt sein. Die Heizeinrichtung 4 ist als elektrische Widerstandsheizung ausgebildet und über einen Anschlussstecker 5 in üblicher Weise mit einer elektrischen Stromversorgung und/oder einer Temperatursteuereinheit verbunden.

Die Heizeinrichtung 4 enthält ein plattenförmiges Heizmodul 6, das über eine Anzahl mechanischer Befestigungselemente 7 am Boden 3 des Behälters 2 befestigt ist. Die mechanischen Befestigungselemente 7 weisen im dargestellten Ausführungsbeispiel Schraubenbolzen 8 auf, die am Boden 3 befestigt, beispielsweise angeschweißt sind und senkrecht von der zu beheizenden Fläche 3a vorstehen. Die Befestigungselemente 7 enthalten weiterhin Muttern 9, die über Unterlegscheiben 10 auf das Heizmodul 6 einwirken und dieses in Richtung auf die zu beheizende Fläche 3a drücken.

Zwischen dem Heizmodul 6 und der zu beheizenden Fläche 3a ist eine Zwischenlage 11 eingelegt. Die Zwischenlage 11 besteht aus einem elastisch nachgiebigen und wärmeleitenden Material, wobei insbesondere eine Graphitfolie geeignet ist. Die Zwischenlage 11 ist bevorzugt gleich bzw. geringfügig größer als das Heizmodul 6, so dass das Heizmodul 6 an keiner Stelle die zu beheizende Fläche 3a berührt. Die Zwischenlage 11, d.h. insbesondere die Graphitfolie oder -schicht, weist eine Dicke von weniger als einem Millimeter auf. Derartige Graphitfolien sind handelsüblich. Von Vorteil ist, dass die Graphitfolie oder -schicht einerseits ausreichend elastisch nachgiebig ist und andererseits sehr gut wärmeleitfähig ist. Anstelle einer Graphitfolie können jedoch auch andere geeignete Materialien verwendet werden.

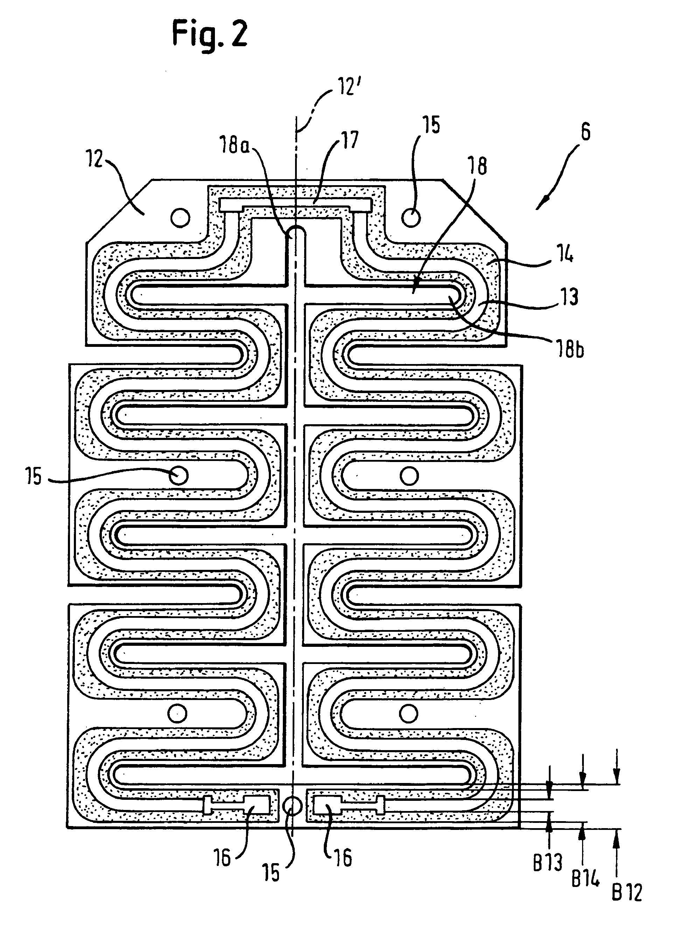

Wie auch in Verbindung mit Fig. 2 ersichtlich, ist das Heizmodul 6 plattenartig aufgebaut. Das Modul 6 enthält einen Träger 12, auf dem eine Dickschichtheizung, bestehend aus einem elektrischen Heizelement 13 und einer Isolationsschicht 14 befestigt ist. Die Isolationsschicht 14 ist bevorzugt eine Emailschicht, die das Heizelement 13 mit dem Träger 12 durch Verschmelzen verbindet. Die Isolierschicht 14 ist weniger als 0,5 mm dick.

Der Träger 12 besteht aus einem Metallblech aus einem Edelstahl, wie er z.B. auch für den Behälter 2 verwendet werden kann, und hat eine im Wesentlichen rechteckige Form mit einer Längsmittellinie 12'. Je nach Form der zu beheizenden Fläche 3a, kann der Träger jedoch jede andere äußere geometrische Gestalt aufweisen.

Der Träger 12 ist mit Durchgangslöchern 15 für die Schraubbolzen 8 der Befestigungsmittel 7 versehen. Eine geradzahlige Anzahl von Öffnungen 15 sind symmetrisch beidseitig der Längsmittellinie 12' angeordnet und gleichmäßig verteilt. Im dargestellten Ausführungsbeispiel sind sieben Befestigungslöcher 15 vorgesehen, je nach Steifigkeit des Trägers können jedoch mehr oder weniger Befestigungslöcher erforderlich sein.

Das Heizelement 13 besteht bevorzugt aus zwei langgestreckte, bandförmige Widerstandsleiter, die sich mäanderförmig in Windungen über den gesamten Träger 12 erstrecken. Die beiden Widerstandsleiter sind über einen Bereich 17 mit verringertem Widerstand verbunden. Anfang und Ende des Heizelementes 13 werden durch Kontaktplatten 16 gebildet, die zum Anschluss an eine externe Stromversorgung, über den Stecker 5, dienen. Bevorzugt ist zwischen den Anschlusskontakten 16 ein weiteres Befestigungsloch 15 vorgesehen.

Die Anschlusskontakte 16 befinden sich randnah an einer Seite des Trägers 12, während der im Bereich der Anschlusskontakte 16 naturgemäß etwas geringere Heizwiderstand durch den Bereich 17 mit verringertem Widerstand an dem den Anschlusskontakten 16 symmetrisch gegenüberliegenden Rand des Trägers 12 ausgeglichen wird. Zwischen diesen Bereichen erstreckt sich das Heizelement 13 in gleichmäßigen, im Wesentlichen gleich großen und symmetrisch zur Längsmittellinie 12' angeordneten, mäanderförmigen Windungen.

Auf diese Weise wird sichergestellt, dass im Wesentlichen der gesamte Träger 12 gleichmäßig beheizt wird.

Der Träger 12 und somit das Heizmodul 6 ist für eine Formanpassung zum Zwecke eines Thermospannungsausgleichs in begrenztem Umfange verformbar. Diese Verformbarkeit wird z.B. durch die Materialeigenschaften und die Dicke des Trägers 12 bestimmt. Im dargestellten Ausführungsbeispiel ist der Träger ein Metallblech, insbesondere aus Edelstahl, und weist eine Dicke von 0,5 mm bis 3 mm, bevorzugt 1,2 mm, auf. Weiterhin ist die Materialmenge des Trägers 12 im Wesentlichen auf das absolut notwendige Maß begrenzt. Das absolut notwendige Maß für die Materialmenge des Trägers bedingt beispielsweise eine Breite B12 des Trägers 12, die über die überwiegende Länge der Längserstreckung des Heizelementes 13 bzw. der Isolationsschicht 14 gleich oder nur unwesentlich breiter als die Breite B14 der Isolationsschicht 14 ist. Dabei ist zu sagen, dass die Isolationsschicht 14 ebenfalls nur um denjenigen Betrag breiter als die Breite B13 des Heizelementes ist, der eine optimale elektrische Isolation des Heizelements gegenüber dem elektrisch leitenden Metallblech des Trägers 12 bietet. Kompromisse müssen gemacht werden im Bereich der Befestigungslöcher 15, um die herum mehr Material stehen bleiben muss. Kompromisse müssen ebenfalls im Hinblick auf eine noch kostengünstige Herstellung gemacht werden, d.h. der Träger 12 folgt nicht sklavisch der Kontur des mäandernden Heizelementes 13, insbesondere nicht an den Krümmungen. Kompromisse müssen weiterhin gemacht werden im Hinblick auf einen Formzusammenhalt, der dafür sorgt, dass das Heizmodul bei der Montage nicht unbeabsichtigt durch Verdrehen oder Verkippen unter mechanische Spannungen gesetzt wird.

Diese Materialverringerung am Träger 12 wird durch ein Muster von Entlastungs-Ausnehmungen 18 bewirkt. Die Entlastungs-Ausnehmungen 18 enthalten im dargestellten Ausführungsbeispiel ein Muster von Schlitzen, wobei sich ein erster Schlitz 18a in der Längsmittellinie 12' erstreckt, jedoch für einen Formzusammenhalt an keinem der Ränder offen ist. Die Entlastungs-Ausnehmungen enthalten weiterhin Querschlitze 18b, die sich im Wesentlichen senkrecht zur Längsmittellinie 12' zwischen den Windungen des Heizelementes 13 erstrecken. Dabei sind die horizontalen Schlitze 18b abwechseln entweder zum Mittellinien-Schlitz 18a oder zur Außenseite des Trägers 12 offen, so dass sich die Teile des Trägers 12, die zwischen den Schlitzen liegen, relativ zueinander bewegen können.

Die Anordnung, Größe und Anzahl der Entlastungs-Ausnehmungen 18, die Dicke des Trägers 12, das Material des Trägers 12 und seine Verformungseigenschaften, die Anzahl der Befestigungsmittel 7 usw. müssen aufeinander und auf die Thermoeigenschaften der zu beheizenden Fläche 3a, beispielsweise der Dicke des Bodens 3 und dessen Material, sowie auf die zu erwartende thermische Belastung so abgestimmt werden, dass eine dynamische Formanpassung des Heizmoduls 6 an die zu beheizende Fläche 3a erfolgt. Das Heizmodul darf beispielsweise nicht zu starr sein, da ansonsten die Anpassung leidet. Es muss jedoch stark genug sein, um die Anzahl der Befestigungsmittel 7 auf ein Minimum reduzieren zu können.

Die erfindungsgemäße Heizeinrichtung 4 wird montiert, indem zunächst die Zwischenlage 11 und anschließend das Heizmodul 6 an der zu beheizenden Fläche 3a angeordnet werden, wobei der Träger 12 an der Zwischenlage 11 anliegt, und anschließend die Befestigungsmittel angezogen sowie die elektrische Verbindung vorgenommen wird. Dabei sollte das Heizmodul 6 einen Großteil der zu beheizenden Fläche 3a bedecken, und kann, falls erforderlich, an eine nicht ebene Fläche 3a, z.B. den gewölbten Boden eines tiefgezogenen Behälters, durch leichte Verformung angepasst werden.

Bei einem gewölbten Boden ist eine thermische Ausdehnungsrichtung durch die Wölbungsrichtung des Bodens vorgegeben. In diesem Fall ist der Träger 12 derart verformbar ausgebildet, dass er einer Ausdehnung des Bodens in der Wölbungsrichtung folgen kann.

Nachfolgend wird ein Beispiel eines Heizungsmoduls beschrieben, das sich besonders für die Beheizung eines Behälters eines Dampfgargeräts eignet.

Das Heizmodul enthält einen plattenartigen Träger mit den äußeren Abmessungen von 150 x 225 aus einem Edelstahlblech mit einer Dicke von 0,8 mm. Auf einer Seite des Trägers wurde eine Dickschichtheizung mit einem einzigen, bandförmigen Heizelement auf einer Isolierschicht aus Email aufgebracht. Heizelement und Isolierschicht erstrecken sich in mäanderförmigen Windungen über den gesamten Träger, wobei jeweils auf einer Seite der Längsmittellinie neun 180°-Kehren angeordnet sind. Die an beiden Seiten der Längsmittellinie am weitesten von den Anschlusskontakten entfernte Windung ist kürzer als die übrigen Windungen, wobei jeweils eine 90°-Windung zur Verbindung mit einem Bereich geringerem Widerstands vorgesehen ist. Die Breite B13 beträgt etwa 5 mm, B14 beträgt etwa 12 bis 13 mm und B12 beträgt etwa 14 bis 15 mm. Die Entlastungs-Ausnehmungen sind als Schlitze mit einer Breite zwischen 6 und 7 mm ausgebildet. Es sind sieben Befestigungslöcher mit einem Durchmesser von jeweils etwa 6 mm vorgesehen, wobei ein Befestigungsloch in der Längsmittellinie zwischen den Anschlusskontakten liegt und sechs Befestigungslöcher in zwei Reihen parallel zur Längsmittellinie und rechts bzw. links davon und etwa auf der Hälfte des Abstandes zwischen der Längsmittellinie und dem äußeren Rand des Trägers vorgesehen sind.

In Abwandlung des beschriebenen und gezeichneten Ausführungsbeispiels kann auf die Zwischenlage verzichtet werden, insbesondere dann, wenn nur eine geringe Heizleistung gefordert wird. Als Träger kann jedes andere Metall oder jeder andere Werkstoff verwendet werden, der mit dem Material der zu beheizenden Fläche kompatibel ist, möglichst einen ähnlichen Ausdehnungskoeffizienten aufweist, verformbar und temperaturbeständig ist und sich zur Befestigung einer Dickschichtheizung eignet. Es ist weiterhin möglich, den Träger von vornherein nur in derjenigen Form bereitzustellen, in der das Heizelement gebracht werden muss, also beispielsweise als mäanderförmig oder anderweitig gekrümmtes Band mit Befestigungslaschen auszubilden.

## Patentansprüche

1. Heizmodul (6) für ein Haushaltsgerät (1), insbesondere ein Kochgerät, mit einem Träger (12) und wenigstens einem darauf über eine Isolationsschicht (14) angeordneten Heizelement (13), **dadurch gekennzeichnet, dass** der Träger (12) zum Ausgleich von Thermospannungen zumindest eine Entlastungs-Aussparung (18) aufweist.

2. Heizmodul (6) nach Anspruch 1, **dadurch gekennzeichnet, dass** zumindest eine Entlastungs-Aussparung (18) ein Schlitz ist.

3. Heizmodul (6) nach Anspruch 1 oder 2, **dadurch gekennzeichnet, dass** der Träger (12) ein Blech aus einem wärmeleitendem Metall, insbesondere Edelstahl, mit einer Dicke von 0,5 mm bis 3 mm, bevorzugt 1,2 mm, enthält.

4. Heizmodul (6) nach einem der vorhergehenden Ansprüche, **dadurch gekennzeichnet, dass** der Träger (12) plattenförmig ausgebildet ist.

5. Heizmodul (6) nach einem der vorhergehenden Ansprüche, **dadurch gekennzeichnet, dass** der Träger (12) eine Breite (B12) quer zur Längsrichtung des Heizelements (13) aufweist, die zumindest über einen Großteil der Länge des Heizelementes (13) die Breite (B14) der Isolationsschicht (14) nicht oder nur unwesentlich übersteigt.

6. Heizmodul (6) nach einem der vorhergehenden Ansprüche, **dadurch gekennzeichnet, dass** das Heizelement (13) für eine homogene Erwärmung des gesamten Träger (12) ausgebildet ist.

7. Heizmodul (6) nach einem der vorhergehenden Ansprüche, **dadurch gekennzeichnet, dass** das Heizelement (13) zumindest einen langgestreckten elektrischen Widerstandsleiter enthält, der über im wesentlichen die gesamte Fläche des Trägers (12) geführt ist.

8. Heizmodul (6) nach Anspruch 7, **dadurch gekennzeichnet, dass** der Widerstandsleiter mäanderförmig über den Träger (12) geführt ist.

9. Heizmodul (6) nach Anspruch 8, **dadurch gekennzeichnet, dass** zwischen den Windungen des Widerstandsleiters die Entlastungs-Aussparung (18) und/oder das Befestigungsmittel (7) angeordnet ist.

10. Heizmodul (6) nach einem der vorhergehenden Ansprüche, **dadurch gekennzeichnet, dass** das Heizelement (13) mit einer symmetrisch über den Träger (12) verteilen Heizleistung ausgebildet ist.

11. Haushaltsgerät (1), insbesondere Kochgerät, **dadurch gekennzeichnet, dass** es mit einem Heizmodul (6) nach Anspruch 1 für wenigstens eine zu beheizende Fläche (3a) ausgerüstet ist.

12. Haushaltsgerät nach Anspruch 11, **dadurch gekennzeichnet, dass** der Träger (12) über eine Anzahl mechanischer Befestigungsmittel (7), insbesondere Schrauben oder Bolzen, mit der zu beheizenden Fläche (3a) verbunden ist.

13. Haushaltsgerät nach Anspruch 12, **dadurch gekennzeichnet, dass** die Befestigungsmittel (7) im wesentlichen gleichmäßig über den Träger (12) verteilt sind.

14. Haushaltsgerät nach einem der vorhergehenden Ansprüche 11 bis 13, **dadurch gekennzeichnet, dass** die zu beheizende Fläche (3a) geringfügig gewölbt ausgebildet ist.

15. Haushaltsgerät nach Anspruch 14, **dadurch gekennzeichnet, dass** das Heizmodul in der Wölbungsrichtung der Fläche (3a) verformbar ist.

16. Haushaltsgerät nach einem der vorhergehenden Ansprüche 11 bis 15, **dadurch gekennzeichnet, dass** das Heizmodul (6) für eine homogene Einleitung der Wärme vom Träger (12) in die zu beheizende Fläche (3a) ausgebildet ist.

17. Haushaltsgerät nach einem der vorhergehenden Ansprüche 11 bis 16, **dadurch gekennzeichnet, dass** zwischen dem Träger (12) und der zu beheizenden Fläche (3a) eine nachgiebig elastische Zwischenlage (11), insbesondere eine Graphitschicht, angeordnet ist.

## Claims

1. Heating module (6) for a domestic appliance (1), particularly a cooking appliance, with a carrier (12) and at least one heating element (13) arranged thereon by way of an insulation layer (14), **characterised in that** the carrier (12) has at least one relief cut-out (18) to compensate for thermoelectric voltages.

2. Heating module (6) according to claim 1, **characterised in that** at least one relief cut-out (18) is a slot.

3. Heating module (6) according to claim 1 or 2, **characterised in that** the carrier (12) includes a plate of a thermally conductive metal, particularly stainless steel, with a thickness of 0.5 millimetres to 3 millimetres, preferably 1.2 millimetres.

4. Heating module (6) according to one of the preceding claims, **characterised in that** the carrier (12) is of plate-shaped construction.

5. Heating module (6) according to one of the preceding claims, **characterised in that** the carrier (12) has a width (B12) transverse to the longitudinal direction of the heating element (13) which at least over a major part of the length of the heating element (13) does not exceed or exceeds only insubstantially the width (B14) of the insulation layer (14).

6. Heating module (6) according to one of the preceding claims, **characterised in that** the heating element (13) is constructed for a homogeneous heating of the entire carrier (12).

7. Heating module (6) according to one of the preceding claims, **characterised in that** the heating element (13) includes at least one elongate electrical resistance conductor which is led substantially over the entire area of the carrier (12).

8. Heating module (6) according to claim 7, **characterised in that** the resistance conductor is led in meander-shape over the carrier (12).

9. Heating module (6) according to claim 8, **characterised in that** the relief cut-out (18) and/or the fastening means (7) is or are arranged between the windings of the resistance conductor.

10. Heating module (6) according to one of the preceding claims, **characterised in that** the heating element (13) is constructed with a heating power distributed symmetrically over the carrier (12).

11. Domestic appliance (1), particularly cooking appliance, **characterised in that** it is equipped with a heating module (6) according to claim 1 for at least one surface (3a) to be heated.

12. Domestic appliance according to claim 11, **characterised in that** the carrier (12) is connected with the surface (3a), which is to be heated, by way of a number of mechanical fastening means (7), particularly screws or bolts.

13. Domestic appliance according to claim 12, **characterised in that** the fastening means (7) are distributed substantially uniformly over the carrier (12).

14. Domestic appliance according to one of the preceding claims 11 to 13, **characterised in that** the surface (3a) to be heated is formed to be slightly dished.

15. Domestic appliance according to claim 14, **characterised in that** the heating module is deformable in the direction of dishing of the surface (3a).

16. Domestic appliance according to one of the preceding claims 11 to 15, **characterised in that** the heating module (6) is constructed for a homogeneous introduction of the heat from the carrier (12) into the surface (3a) to be heated.

17. Domestic appliance according to one of the preceding claims 11 to 16, **characterised in that** a flexibly resilient intermediate layer (11), particularly a graphite layer, is arranged between the carrier (12) and the surface (3a) to be heated.

## Revendications

1. Module de chauffage (6) pour un appareil ménager (1), en particulier un appareil de cuisson, comprenant un support (12) et au moins un élément de chauffage (13) disposé dessus par une couche d'isolation (14), **caractérisé en ce que** le support (12) présente, pour l'équilibrage de tensions thermiques, au moins un évidement de décharge (18).

2. Module de chauffage (6) selon la revendication 1, **caractérisé en ce qu'**au moins un évidement de décharge (18) est une fente.

3. Module de chauffage (6) selon la revendication 1 ou 2, **caractérisé en ce que** le support (12) contient une tôle à base d'un métal thermoconducteur, en particulier de l'acier fin, présentant une épaisseur de 0,5 mm à 3 mm, de préférence 1,2 mm.

4. Module de chauffage (6) selon l'une quelconque des revendications précédentes, **caractérisé en ce que** le support (12) est conçu en forme de plaque.

5. Module de chauffage (6) selon l'une quelconque des revendications précédentes, **caractérisé en ce que** le support (12) présente une largeur (B12) transversalement à la direction longitudinale de l'élément de chauffage (13), qui ne dépasse pas ou seulement très légèrement la largeur (B14) de la couche d'isolation (14) au moins sur une grande partie de la longueur de l'élément de chauffage (13).

6. Module de chauffage (6) selon l'une quelconque des revendications précédentes, **caractérisé en ce que** l'élément de chauffage (13) est réalisé pour un réchauffement homogène de l'ensemble du support (12).

7. Module de chauffage (6) selon l'une quelconque des revendications précédentes, **caractérisé en ce que** l'élément de chauffage (13) garantit au moins un conducteur de résistance électrique étiré en longueur qui est guidé sur sensiblement l'ensemble de la surface du support (12).

8. Module de chauffage (6) selon la revendication 7, **caractérisé en ce que** le conducteur de résistance est guidé en forme de méandre sur le support (12).

9. Module de chauffage (6) selon la revendication 8, **caractérisé en ce que** l'évidement de décharge (18) et/ou le moyen de fixation (7) est/sont disposé(s) entre les spires du conducteur de résistance.

10. Module de chauffage (6) selon l'une quelconque des revendications précédentes, **caractérisé en ce que** l'élément de chauffage (13) est conçu avec une puissance de chauffage répartie de façon symétrique sur le support (12).

11. Appareil ménager (1), en particulier appareil de cuisson, **caractérisé en ce qu'**il est équipé d'un module de chauffage (6) selon la revendication 1 pour au moins une surface (3a) à chauffer.

12. Appareil ménager selon la revendication 11, **caractérisé en ce que** le support (12) est relié à la surface (3a) à chauffer au moyen d'un certain nombre de moyens de fixation (7) mécaniques, en particulier des vis ou des boulons.

13. Appareil ménager selon la revendication 12, **caractérisé en ce que** les moyens de fixation (7) sont répartis de façon sensiblement uniforme sur le support (12).

14. Appareil ménager selon l'une quelconque des revendications 11 à 13 précédentes, **caractérisé en ce que** la surface (3a) à chauffer est conçue de façon légèrement incurvée.

15. Appareil ménager selon la revendication 14, **caractérisé en ce que** le module de chauffage peut être déformé dans la direction de courbure de la surface (3a).

16. Appareil ménager selon l'une quelconque des revendications précédentes 11 à 15, **caractérisé en ce que** le module de chauffage (6) est conçu pour une introduction homogène de la chaleur depuis le support (12) dans la surface (3a) à chauffer.

17. Appareil ménager selon l'une quelconque des revendications précédentes 11 à 16, **caractérisé en ce que** entre le support (12) et la surface (3a) à chauffer est disposée une couche intermédiaire (11) élastique souple, en particulier une couche de graphite.
